# EUROPEAN PATENT APPLICATION

(11) **EP 2 617 646 A2**
(43) Date of publication of application: **24.07.2013**
(21) Application number: 13150850.9
(22) Date of filing: 10.01.2013
(51) Int. Cl.: B64C 13/42, B64C 13/50

(54) **Aircraft actuator hydraulic system**

(30) Priority: 17.01.2012 JP 2012006747
(71) Applicant: Nabtesco Corporation, Tokyo 102-0093 (JP)
(72) Inventor: Takeda, Minoru, Hyogo, Hyogo 651-2271 (JP); Fukui, Atsushi, Gifu, 503-2192 (JP)
(74) Representative: Isarpatent

(57) **Abstract**

A backup hydraulic pump (17) supplies pressure oil to an actuator (11a) when a loss or degradation of the function of an aircraft central hydraulic power source (104) occurs. A control valve (15a, 15b) controls the operation of the actuator (11a) by controlling supply and discharge of the pressure oil to/from the actuator (11a). The control valve has a main body (27) provided with a pressure oil port (32a-f), a spool portion (28) that moves in a sliding manner within the main portion and switches a path of the pressure oil, and a drive portion (29). The drive portion (29) is connected to an end of the spool portion (28) and drives the spool portion (28) by electromagnetic force so as to control the position of the spool portion (28) based on an electric signal.

## Description

### CROSS-REFERENCE TO RELATED APPLICATION

This application claims priority to Japanese Patent Application No. 2012-6747. The entire disclosure of Japanese Patent Application No. 2012-6747 is hereby incorporated herein by reference.

### BACKGROUND OF THE INVENTION

### Field of the Invention

The present invention relates to aircraft actuator hydraulic systems for driving moving surfaces of aircrafts using hydraulically operated actuators.

### Description of the Related Art

An aircraft is provided with moving surfaces (flight control surfaces), which are primary flight control surfaces configured as control surfaces such as ailerons, rudders, elevators, and the like, or secondary flight control surface configured as flaps, spoilers, and the like. As actuators for driving those moving surfaces, hydraulically operated actuators are often used. Pressure oil is supplied to those actuators from an aircraft central hydraulic power source, which is a hydraulic power source installed in a body of the aircraft. However, a loss or degradation of the function of the aircraft central hydraulic power source (pressure oil supply function) may occur in some cases. To cope with such cases, JP2007-46790A discloses a hydraulic system (aircraft actuator hydraulic system) capable of supplying pressure oil to the actuators even in the case of a loss or degradation of the function of the aircraft central hydraulic power source.

The aircraft actuator hydraulic system disclosed in JP2007-46790A includes a pump provided independently from the aircraft central hydraulic power source, and an electric motor for driving the pump. The pump is provided so as to raise the pressure of the pressure oil discharged from the actuator and supply the pressure oil to the actuator. The electric motor is configured to drive the pump when the pressure falls in the aircraft central hydraulic power source and the function thereof is lost or degraded.

Further, on a path that allows the actuator to the aircraft central hydraulic power source and the above-mentioned pump to be in communication with the actuator, a control valve is provided for controlling operation of the actuator by controlling supply and discharge of the pressure oil to/from the actuator. The operation of the actuator is controlled by closed-loop control, and a valve structure including an electrohydraulic servo valve is used for the above-mentioned control valve.

JP2007-46790A discloses a control valve having a valve structure including an electric control valve (22) and a mode switching valve (25). The electric control valve (22) is configured as a direction switching valve for switching directions of supply and discharge of pressure oil to/from the actuator between the actuator and the aircraft central hydraulic power source and pump mentioned above. The mode switching valve (25) is provided as an electrohydraulic servo valve and configured to control the operation of the actuator as a result of control of the position of a spool using pilot pressure oil introduced to both ends of the spool. This mode switching valve (25) is configured to be able to switch the spool position to a damping mode position and also to a bypass mode position.

JP2008-25726A discloses a manifold apparatus including an electrohydraulic servo valve as a control valve that is provided on a path between an aircraft central hydraulic power source and an actuator and controls supply and discharge of pressure oil to/from the actuator.

Generally, an electrohydraulic servo valve includes a pilot stage and a main stage. On the pilot stage, a nozzle-flapper hydraulic pressure amplification mechanism is driven based on an electric signal from a controller, and the pressure of pilot pressure oil introduced into both ends of a spool on the main stage is controlled. The position of the spool on the main stage is controlled by the pilot pressure oil produced on the pilot stage. Thus supply and discharge of the pressure oil to/from the actuator is controlled, and the operation of the actuator is controlled.

JP10-30857A discloses a cooling device for cooling an electronic device mounted in an aircraft. This cooling device is configured as a mechanism for guiding air outside an airframe to an electronic device, cooling the device, and then externally discharging the air. Therefore, with the cooling device, increase in the size of the cooling device can be prevented.

### SUMMARY OF THE INVENTION

Even if a loss or degradation of the function of an aircraft central hydraulic power source occurs in an aircraft, an actuator can be driven by operating an aircraft actuator hydraulic system such as the one disclosed in JP2007-46790A. Meanwhile, at the time of a loss or degradation of the function of the aircraft central hydraulic power source, the above-mentioned hydraulic system is continuously run, and the temperature of the hydraulic system increases accordingly. Consequently, to prevent the increase in the temperature of the hydraulic system, a cooling device is necessary that has a cooling capability suitable for the heat value of the system as a whole including an actuator, a backup hydraulic pump, an electric motor, and a control valve. Here, a larger heat value in the hydraulic system will result in increase in the size of the cooling device.

As mentioned above, JP10-30857A discloses a cooling device for cooling an electronic device mounted in an aircraft. Although it is possible to prevent increase in the size of this cooling device, which is configured as a mechanism for guiding air outside an airframe to devices to be cooled and then externally discharging the air, the device will increase resistance on the aircraft during flight. Therefore, provision of the cooling device disclosed in JP10-30857A as a device for cooling the hydraulic system will decrease airframe efficiency of the aircraft.

In addition, devices installed in an aircraft are required to be lighter and smaller from a viewpoint of improvement in aircraft fuel efficiency, and the hydraulic system is also desired to be lighter and smaller. For this reason, it is necessary to suppress heat generation in the hydraulic system as a whole and reduce the size or the number of the cooling devices.

In light of the foregoing situation, it is an object of the present invention to provide an aircraft actuator hydraulic system capable of driving an actuator even at the time of a loss or degradation of a function of an aircraft central hydraulic power source, preventing decrease in airframe efficiency while suppressing heat generation in the system as a whole, and achieving reduction in the size and weight of a system configuration.

The aircraft actuator hydraulic system according to a first feature of the present invention to achieve the above-stated object is an aircraft actuator hydraulic system for driving a moving surface of an aircraft using a hydraulically operated actuator, comprising: an actuator that operates as a result of a pressure oil being supplied from an aircraft central hydraulic power source installed in a body of the aircraft and drives the moving surface; a backup hydraulic pump capable of supplying the pressure oil to the actuator when a loss or degradation of a function of the aircraft central hydraulic power source occurs; an electric motor that drives the backup hydraulic pump; and a control valve that is provided on a path that allows the backup hydraulic pump and the aircraft central hydraulic power source to be in communication with the actuator, and controls an operation of the actuator by controlling supply of the pressure oil to the actuator and discharge of the pressure oil from the actuator, wherein the control valve has a main body provided with a pressure oil port to/from which the pressure oil is supplied and discharged, a spool portion provided so as to be slidable in the main body and capable of switching a path of the pressure oil, and a drive portion that is connected to an end of the spool portion and drives the spool portion by an electromagnetic force so as to control a position of the spool portion based on an electric signal.

With this configuration, even if a loss or degradation of the function of the aircraft central hydraulic power source occurs, the pressure oil is supplied from the backup hydraulic pump, and the actuator can thus be driven. Furthermore, the control valve is not configured as an electrohydraulic servo valve, but configured so that the drive portion is connected to an end of the spool portion and drives the spool portion by electromagnetic force so as to control the position of the spool portion based on an electric signal. In other words, with the above configuration, the control valve for controlling the operation of the actuator by controlling supply and discharge of the pressure oil to/from the actuator is configured as a direct-drive valve structure that directly drives the spool portion by electromagnetic force based on an electric signal from a superordinate controller.

The present inventor intensively studied the causes of heat generation in conventional hydraulic systems each provided with an actuator, a backup hydraulic pump, an electric motor, and a control valve including an electrohydraulic servo valve. As a result, it was found that an increase in work load of the backup hydraulic pump and the electric motor associated with oil leakage in the electrohydraulic servo valve has a major influence as a cause of the above-mentioned heat generation in the hydraulic systems. In addition, the present inventor verified that it is possible to reduce the work load of the backup hydraulic pump and the electric motor associated with oil leakage and significantly reduce the heat generation in the hydraulic system by configuring the control valve as the above-mentioned direct-drive valve structure capable of greatly reducing the oil leakage. Note that it was confirmed that in the case where the actuator to which the configuration of the present invention is applied is an actuator for a large aircraft as well as an actuator for an elevator or a rudder that is a large-output actuator, the hydraulic system to which the configuration of the present invention is applied is able to reduce the heat value approximately by 10% to 15%, as compared with conventional hydraulic systems. It was also confirmed that in the case where the actuator to which the configuration of the present invention is applied is an aircraft for a small aircraft, the hydraulic system to which the configuration of the present invention is applied is able to reduce the heat value approximately by 50%, as compared with conventional hydraulic systems.

Consequently, with the above configuration, the heat generation in the hydraulic system as a whole is suppressed, and it is therefore possible to achieve reduction in the size or the number of cooling devices. As a result, reduction in the weight and size of the hydraulic system as a whole can be achieved. Furthermore, because the reduction in the size or the number of cooling devices can be achieved, it is not necessary to provide any cooling device for guiding the air outside the airframe to the device to be cooled and then discharging the air to the outside. As a result, decrease in the airframe efficiency can be prevented as well.

Accordingly, with the above configuration, it is possible to provide an aircraft actuator hydraulic system capable of driving an actuator even at the time of a loss or degradation of a function of an aircraft central hydraulic power source, preventing decrease in airframe efficiency while suppressing heat generation in the system as a whole, and achieving reduction in the size and weight of a system configuration.

The aircraft actuator hydraulic system according to a second feature of the present invention is the aircraft actuator hydraulic system of the first feature, wherein the backup hydraulic pump, the electric motor, and the control valve are installed inside a wing on which the moving surface is provided in the aircraft.

With this configuration, the backup hydraulic pump, the electric motor, and the control valve are installed inside the wing on which the moving surface is provided, and are therefore installed in an area closer to the actuator. Therefore, it is not necessary to provide any long pipeline or the like such as in the case where those components are installed on the airframe side. As a result, further reduction in the weight and the size of the hydraulic system can be achieved.

Note that in recent years, wings are desired to be thinned for the purpose of increasing airframe efficiency to achieve improvement in fuel efficiency In addition, as the wings are thinned, it is desirable to achieve further reduction in the size of the hydraulic system installed inside each wing without decreasing the output level of the actuator. In this case, with a reduction in the size of the backup hydraulic pump and an increase in the rotational speed of the backup hydraulic pump, it is possible to further reduce the size of the hydraulic system installed in each wing without decreasing the output level of the actuator. Moreover, there is a general tendency that the total heat value of the electric motor and the pump rotationally driven thereby increases proportional to the increase in the rotational speed of the pump, and increases proportional in higher dimensions (two dimensions or higher) to the increase in an area of friction accompanying the increase in the size of the pump. Therefore, as a result of reduction in the size of the backup hydraulic pump and the higher rotational speed of the backup hydraulic pump, the total heat value of the backup hydraulic pump and the electric motor reduces without decreasing the output level of the actuator. Accordingly, in this case, the heat generation in the hydraulic system can be further suppressed.

The aircraft actuator hydraulic system according to a third feature of the present invention is the aircraft actuator hydraulic system of the first or second feature, further comprising an actuator controller that controls an operation of the actuator via the control valve by outputting the electric signal to the control valve to drive the drive portion, wherein the main body of the control valve and a casing of the actuator controller are integrally fixed, or fixed via a common base member.

With this configuration, the main body of the control valve and the casing of the actuator controller serving as a superordinate controller for outputting an electric signal to the control valve to drive the drive portion are integrally fixed, or fixed to a common base member. Therefore, current necessary for driving the control valve can be supplied via the actuator controller directly fixed, or fixed via the base member, to the control valve. It is thus possible to remarkably simplify wiring for supplying the current, and further simplify the configuration.

The aircraft actuator hydraulic system according to a fourth feature of the present invention is the aircraft actuator hydraulic system of any one of the first to third features, wherein a rotational speed of the backup hydraulic pump, at which the backup hydraulic pump is rotationally driven by the electric motor, can be switched to multiple levels.

In a situation where the flight condition of an aircraft drastically changes depending on the weather or air current condition, or in a situation where the aircraft operates to take off or land, the actuator is required to operate so as to produce a high output. Meanwhile, a situation where the flight condition of the aircraft is stable can be handled by the actuator operating so as to produce a low output. Therefore, with the above configuration, the rotational speed of the backup hydraulic pump can be switched to multiple levels, and it is thus possible to change the rotational speed of the backup hydraulic pump in accordance with the required output level of the actuator. Consequently, it is possible to further improve the operation efficiency of the backup hydraulic pump and the electric motor, and further suppress the heat generation.

It should be appreciated that the above and other objects, features and advantages of the present invention will become apparent from the following description taken in conjunction with the accompanying drawings.

### BRIEF DESCRIPTION OF THE DRAWINGS

FIG. 1 is a schematic view of part of an aircraft to which an aircraft actuator hydraulic system according to one embodiment of the present invention is applied.
FIG. 2 is a hydraulic circuit diagram schematically showing a hydraulic circuit including the aircraft actuator hydraulic system shown in FIG. 1.
FIG. 3 is a diagram showing a control valve and an actuator controller that are integrally fixed in the aircraft actuator hydraulic system shown in FIG. 1, including a cross-sectional view of the control valve.
FIG. 4 is a partial enlarged cross-sectional view of the control valve shown in FIG. 3.
FIG. 5 is a diagram showing a general relationship among the size of a pump, the heat value of a pump and an electric motor, and the rotational speed of a pump.

### DETAILED DESCRIPTION OF THE INVENTION

An embodiment for implementing the present invention will be hereinafter described with reference to the drawings. Note that the embodiment of the present invention can be widely applied to aircraft actuator hydraulic systems for driving moving surfaces of aircrafts using hydraulically operated actuators.

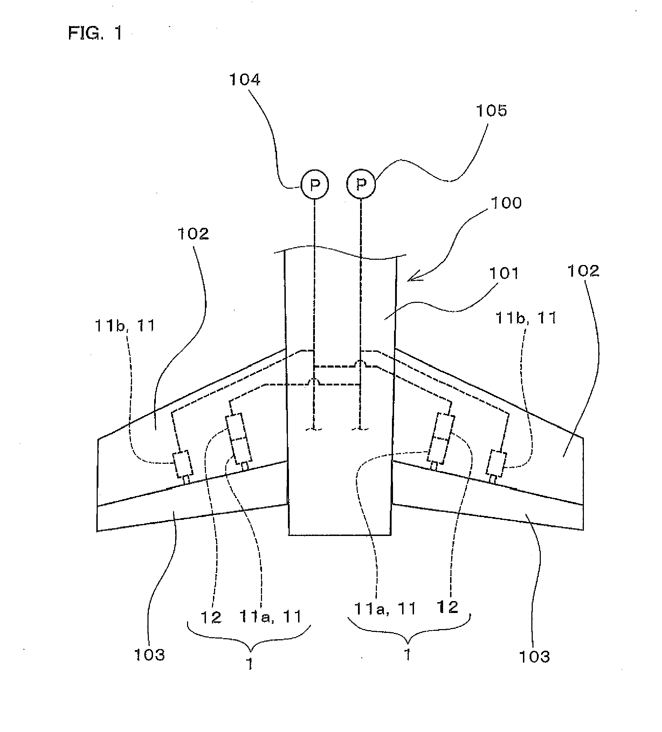

FIG. 1 is a schematic view of part of an aircraft 100 to which an aircraft actuator hydraulic system 1 (hereinafter also simply referred to as "hydraulic system 1") according to one embodiment of the present invention is applied, schematically showing the rear of a body 101 of the aircraft 100 and a pair of tailplanes (102, 102). Note that in the schematic view of FIG. 1, a vertical stabilizer at the rear of the body 101 is omitted.

Each tailplane (102, 102) is provided with an elevator 103 as a moving surface (flight control surface) that constitutes a control surface of the aircraft 100. Each tailplane 102 constitutes a wing in the present embodiment. The elevator 103 on each tailplane 102 is configured to be driven by a plurality of (e.g., two) actuators 11 (11a, 11b), as shown as an example in FIG. 1. Inside the tailplane 102, the actuators (11a, 11b) for driving the elevator 103 and a hydraulic device 12 configured to supply pressure oil to the actuator 11a, which is one of the actuators 11, are installed. The hydraulic system 1 according to the present embodiment includes the actuator 11a and the hydraulic device 12, and is configured to drive the elevator 103 by the actuator 11a.

In the present embodiment, the actuators (11a, 11b) and the hydraulic devices 12 installed in the pair of tailplanes (102, 102) are configured respectively in the same manner, and the hydraulic systems 1 installed in the tailplanes 102 are also configured in the same manner. Therefore, the description will be given below of the actuators (11a, 11b) and the hydraulic device 12 installed in a first tailplane 102, which is one of the tailplanes 102, and the hydraulic system 1 including the actuator 11a, which is one of these actuators (11a, 11b), and this hydraulic device 12. Meanwhile, the description will be omitted of the actuators (11a, 11b) and the hydraulic device 12 installed in a second tailplane 102, which is the tailplane 102 other than the first tailplane 102, and the hydraulic system 1 including the actuator 11a, which is one of these actuators (11a, 11b), and this hydraulic device 12 .

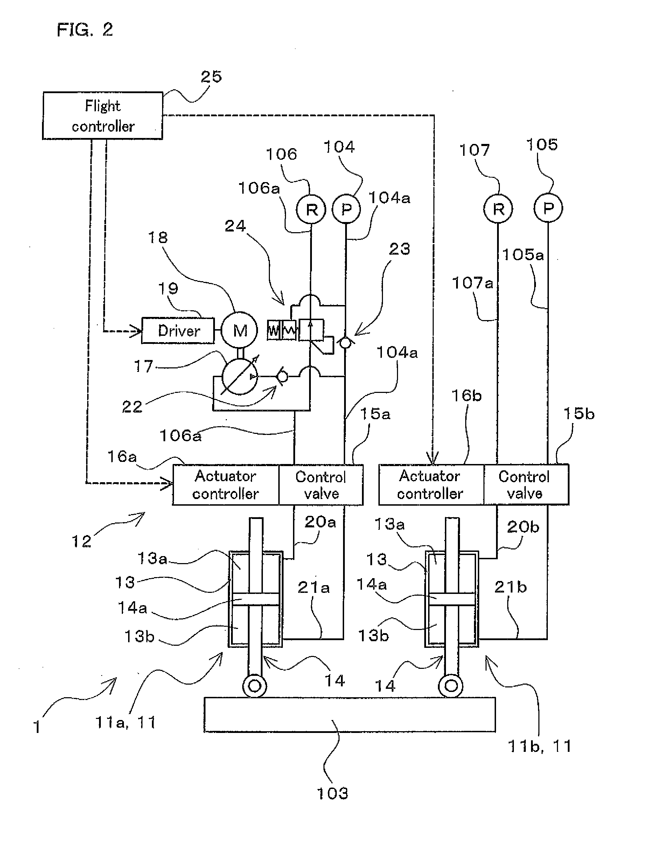

FIG. 2 is a hydraulic circuit diagram schematically showing a hydraulic circuit including the hydraulic system 1. Note that FIG. 2 shows a hydraulic circuit diagram showing a hydraulic circuit including the actuators (11a, 11b) for driving the elevator 103 provided on the first tailplane 102 and the hydraulic device 12 configured to supply the pressure oil to the actuator 11a, which is one of these actuators (11a, 11b).

As shown in FIG. 2, each actuator (11a, 11b) has a cylinder 13, a rod 14 having a piston 14a, and so on. In each actuator (11a, 11b), the cylinder 13 is internally divided by the piston 14a into two oil chambers (13a, 13b). In other words, the two oil chambers (13a, 13b) are separated by the piston 14a capable of being displaced within the cylinder 13, so that the pressure oil does not move between those oil chambers.

Each oil chamber (13a, 13b) in the cylinder 13 in the actuator 11a is configured to be able to be in communication with a first aircraft central hydraulic power source 104 and a reservoir circuit 106 via a control valve 15a included in the hydraulic device 12, which will be described later. Meanwhile, each oil chamber (13a, 13b) in the cylinder 13 in the actuator 11b is configured to be able to be in communication with a second aircraft central hydraulic power source 105 and a reservoir circuit 107 via a control valve 15b.

Each of the first aircraft central hydraulic power source 104 and the second aircraft central hydraulic power source 105 is provided as an aircraft central hydraulic power source serving as a hydraulic power source installed inside the body 101 as an independent system having a hydraulic pump for supplying the pressure oil. The actuators 11 for driving the elevator 103 and actuators (not shown) for driving moving surfaces other than the elevator 103 are configured to operate as a result of the pressure oil being supplied thereto from the first and second aircraft central hydraulic power sources (104, 105).

To the actuators 11, the first aircraft central hydraulic power source 104 is connected so as to be able to supply the pressure oil to the actuator 11a installed on the first tailplane 102 and the actuator 11b installed on the second tailplane 102. Meanwhile, the second aircraft central hydraulic power source 105 is connected so as to be able to supply the pressure oil to the actuator 11b installed on the first tailplane 102 and the actuator 11a installed on the second tailplane 102.

The reservoir circuit 106 includes a tank (not shown) into which the oil (hydraulic fluid) that has been supplied as the pressure oil and then discharged from the actuators 11 flows and returns. The reservoir circuit 106 is configured to be in communication with the first aircraft central hydraulic power source 104. The reservoir circuit 107, which is configured as a system independent from the reservoir circuit 106, includes a tank (not shown) into which the oil (hydraulic fluid) that has been supplied as the pressure oil and then discharged from the actuators 11 flows and returns. The reservoir circuit 107 is configured to be in communication with the second aircraft central hydraulic power source 105 configured as a system independent from the first aircraft central hydraulic power source 104.

Note that the reservoir circuit 106 is connected to the actuator 11a installed on the first tailplane 102 and the actuator 11b installed on the second tailplane 102, and is also connected to the first aircraft central hydraulic power source 104. Thus the pressure of the oil returning to the reservoir circuit 106 is raised by the first aircraft central hydraulic power source 104, and the oil is then supplied to a predetermined actuator 11. On the other hand, the reservoir circuit 107 is connected to the actuator 11b installed on the first tailplane 102 and the actuator 11a installed on the second tailplane 102, and is also connected to the second aircraft central hydraulic power source 105. Thus the pressure of the oil returning to the reservoir circuit 107 is raised by the second aircraft central hydraulic power source 105, and the oil is then supplied to a predetermined actuator 11.

Next, the hydraulic device 12 in the hydraulic system 1 will be described. Each hydraulic device 12 shown in FIGS. 1 and 2 is configured to supply the pressure oil to the hydraulically operated actuator 11a for driving the elevator 103. The hydraulic device 12 is installed inside the tailplane 102.

Note that the present embodiment will be described by taking, as an example, a mode of the hydraulic system 1 in which the hydraulic device 12 supplies the pressure oil to the actuator 11a for driving a moving surface configured as the elevator 103. However, this need not be the case. In other words, a hydraulic system configured so that the hydraulic device 12 supplies the pressure oil to an actuator for driving a moving surface other than an elevator, such as an aileron, may alternatively be implemented.

The hydraulic device 12 includes a control valve 15a, an actuator controller 16a, a backup hydraulic pump 17, an electric motor 18, a driver 19, and so on. The control valve 15a, the actuator controller 16a, the backup hydraulic pump 17, the electric motor 18, and the driver 19 in the hydraulic device 12 are installed inside the tailplane 102.

The control valve 15a is provided in a path that allows the first aircraft central hydraulic power source 104 and the backup hydraulic pump 17, which will be described later, to be in communication with the actuator 11a. The control valve 15a is provided as a valve mechanism for controlling the operation of the actuator 11a by controlling supply and discharge of the pressure oil to/from the actuator 11a. In the present embodiment, the control valve 15a is configured to switch the state of connection of a supply path 104a in communication with the first aircraft central hydraulic power source 104 and a discharge path 106a in communication with the reservoir circuit 106 to the supply/discharge paths (20a, 21a) respectively in communication with the oil chambers (13a, 13b) in the actuator 11a. Note that a mode switching valve, which is not shown in the drawings, for switching the communication state (mode) of the oil chambers (13a, 13b) is provided between the control valve 15a and the actuator 11a.

The control valve 15b is provided as a valve mechanism for switching a state of connection of a supply path 105a in communication with the second aircraft central hydraulic power source 105 and a discharge path 107a in communication with the reservoir circuit 107 to the supply/discharge paths (20b, 21b) respectively in communication with the oil chambers (13a, 13b) in the actuator 11b. The control valve 15b is configured to control the operation of the actuator 11b by controlling supply and discharge of the pressure oil to/from the actuator 11b. Note that the structure of the control valve 15b is configured in the same manner as that of the control valve 15a.

The actuator controller 16a is provided as a controller for outputting an electric signal as a control signal to the control valve 15a to operate the control valve 15a, and controlling the operation of the actuator 11a via the control valve 15a. The actuator controller 16a is configured to control the actuator 11a based on a command signal from a flight controller 25, which is a further superordinate computer that commands the operation of the elevator 103.

The actuator controller 16b is provided as a controller for outputting an electric signal as a control signal to the control valve 15b to operate the control valve 15b, and controlling the operation of the actuator 11b via the control valve 15b. The actuator controller 16b is configured to control the actuator 11b based on a command signal from the flight controller 25.

The actuator controller 16a and the actuator controller 16b are provided as distributed processing controllers. The actuator controller 16a and the control valve 15a are integrally fixed, and are installed on, or in the vicinity of, the actuator 11a. The actuator controller 16b and the control valve 15b are integrally fixed, and are installed on, or in the vicinity of, the actuator 11b.

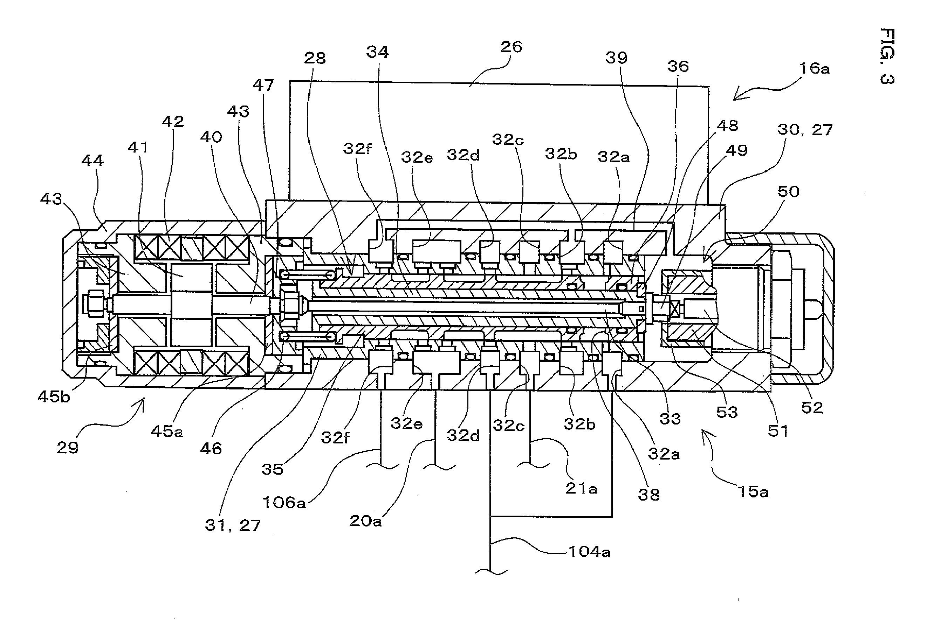

FIG. 3 is a diagram showing the integrally fixed control valve 15a and actuator controller 16a, with a cross-sectional view of the control valve 15a. As shown in FIG. 3, a casing 26 of the actuator controller 16a and a main body 27 of the control valve 15a having pressure oil ports to/from which the pressure oil is supplied and discharged are integrally fixed. Current necessary for driving the control valve 15a is supplied thereto from a power source (not shown) via the actuator controller 16a. The actuator controller 16b and the control valve 15b, which are not shown in the drawings, are configured in the same manner as the actuator controller 16a and the control valve 15a, respectively.

Note that the present embodiment has been described by taking, as an example, the case where a command signal from one flight controller 25 is input to the different actuator controllers (16a, 16b). However, this need not be the case. For example, command signals from different flight controllers may alternatively be input to the respective actuator controllers (16a, 16b).

The backup hydraulic pump 17 is configured as, for example, a variable-capacity hydraulic pump. This backup hydraulic pump 17 is connected so as to be in communication on its suction side with the discharge path 106a, and is connected so as to be in communication on its discharge side with the supply path 104a via a check valve 22 so as to be able to supply the pressure oil to the supply path 104a. The backup hydraulic pump 17 is provided as a hydraulic pump capable of supplying the pressure oil to the actuator 11a in the case where a loss or degradation of the function (pressure oil supply function) of the first aircraft central hydraulic power source 104 occurs due to failure, oil leakage, or the like of the hydraulic pump in the first aircraft central hydraulic power source 104.

The supply path 104a is provided, on the upstream side (the first aircraft central hydraulic power source 104 side) of a portion connected to the backup hydraulic pump 17 on the discharge side thereof, with a check valve 23 for allowing a flow of the pressure oil to the actuator 11a and restricting a reverse oil flow. The discharge path 106a is provided, on the downstream side (the reservoir circuit 106 side) of a portion connected to the backup hydraulic pump 17 on the suction side thereof, with a relief valve 24 for discharging the pressure oil to the reservoir circuit 106 when the pressure of the oil discharged from the actuator 11a rises. The relief valve 24 is provided with a pilot pressure chamber that is in communication with the supply path 104a and in which a spring is disposed.

If the pressure of the pressure oil supplied from the supply path 104a falls below a predetermined pressure value, the pressure (pilot pressure) of the pressure oil supplied as the pilot pressure oil from the supply path 104a to the above-mentioned pilot pressure chamber also falls below a predetermined pressure value, and the discharge path 106a is blocked by the relief valve 24. At the time of a loss or degradation of the function of the first aircraft central hydraulic power source 104, the oil discharged from the actuator 11a does not return to the reservoir circuit 106, but the pressure of the oil is raised by the backup hydraulic pump 17, and the pressure oil with the raised pressure is supplied to the actuator 11a because of provision of the above-described check valves (22, 23) and the relief valve 24.

Note that the flight controller 25 is connected to a pressure sensor (not shown) for detecting a discharge pressure of the first aircraft central hydraulic power source 104 or a pressure of the pressure oil that passes through the supply path 104a so that a pressure detection signal detected by this pressure sensor is input to the flight controller 25. The flight controller 25 is configured to detect a loss or degradation of the function of the first aircraft central hydraulic power source 104 based on the above pressure detection signal.

The electric motor 18 is connected to the backup hydraulic pump 17 via a coupling, or directly connected thereto without a coupling, and is configured to drive the backup hydraulic pump 17. Note that the operation state of the electric motor 18 is controlled via the driver 19 based on a command signal from the flight controller 25. The driver 19 includes a circuit board for controlling, based on a command signal from the flight controller 25, the electricity supplied to the electric motor 18 and the operation speed (rotational speed) of the electric motor 18 to drive the electric motor 18, and so on.

In the present embodiment, the rotational speed of the backup hydraulic pump 17 rotationally driven by the electric motor 18 can be switched between multiple levels. For example, the rotational speed of the backup hydraulic pump 17 can be switched between two levels, which are high-speed rotation and low-speed rotation.

The rotational speed of the backup hydraulic pump 17 is set to a high rotational speed in the case where the actuator 11a is required to operate so as to produce a high output, such as in a situation where the flight condition of the aircraft drastically changes depending on the weather or air current condition, or in a situation where the aircraft takes off or lands. On the other hand, the rotational speed of the backup hydraulic pump 17 is set to a low rotational speed that is a lower speed than the above-mentioned high rotational speed in a situation that can be handled with the actuator 11a producing a low output, such as in a situation where the flight condition of the aircraft is stable. The high rotational speed is set to a predetermined rotational speed ranging from 10000 rpm to 12000 rpm, for example. The low rotational speed is set to a predetermined rotational speed ranging from 5000 rpm to 6000 rpm, for example.

Note that the rotational speed of the backup hydraulic pump 17 may be configured to be switchable between three or more levels. For example, the rotational speed of the backup hydraulic pump 17 may be configured to be switchable between three levels, which are high, middle, and low rotational speeds. The high rotational speed that is the highest rotational speed among the three-level speed settings is set to a predetermined rotational speed ranging from 10000 rpm to 12000 rpm, for example. The middle rotational speed that is the second highest rotational speed among the three-step speed settings is set to a predetermined rotational speed ranging from 5000 rpm to 6000 rpm, for example. The low rotational speed that is the lowest rotational speed among the three-level speed settings is set to a predetermined rotational speed ranging from 2000 rpm to 3000 rpm, for example.

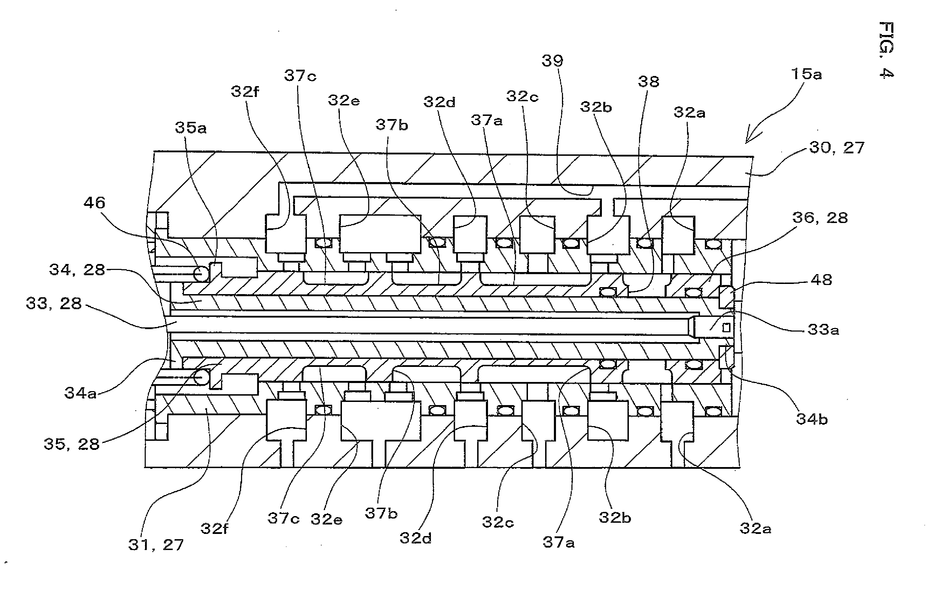

Next, the structure of the control valve 15a will be described in detail with reference to FIGS. 3 and 4. Note that FIG. 4 is a partial enlarged cross-sectional view of the control valve 15a shown in FIG. 3. As shown in FIGS. 3 and 4, the control valve 15a includes the main body 27, a spool portion 28, a drive portion 29, and so on.

The main body 27 is provided as a structure that contains the spool portion 28 and to which the drive portion 29 is fixed and attached. The main body 27 includes a housing 30 and a sleeve 31.

The housing 30 is integrally fixed to the casing 26 of the actuator controller 16a. The sleeve 31 is installed inside the housing 30, and contains the spool portion 28. The housing 30 and the sleeve 31 are both formed in a tubular shape, for example. The sleeve 31 is fixed to the housing 30 in a state where the outer circumference of the sleeve 31 is in close contact with the inner circumference of the housing 30.

The main body 27 is provided with a plurality of pressure oil ports (32a, 32b, 32c, 32d, 32e, 32f) to/from each of which the pressure oil is supplied and discharged. Each pressure oil port (32a, 32b, 32c, 32d, 32e, 32f) is provided throughout the housing 30 and the sleeve 31. The pressure oil ports (32a, 32c, 32d, 32e, 32f) excluding the pressure oil port 32b are configured so that the outer circumferential side of the housing 30 can be in communication with the inner circumferential side of the sleeve 31. Meanwhile, the pressure oil port 32b is configured so as to be in communication with the inner circumferential side of the sleeve 31. Furthermore, each pressure oil port (32a, 32b, 32c, 32d, 32e, 32f) is configured so as to extend to form a groove shape along the inner circumference of the housing 30 and the outer circumference of the sleeve 31.

The pressure oil port 32a is in communication with the supply path 104a. The pressure oil port 32b is in communication with the pressure oil port 32f via a communication path 39 formed as a through hole in the housing 30. The pressure oil port 32c is in communication with the supply path 21a. The pressure oil port 32d is in communication with the supply path 104a. The pressure oil port 32e is in communication with the supply/discharge path 20a. The pressure oil port 32f is in communication with the discharge path 106a.

The spool portion 28 is installed so as to be slidable inside the main body 27, and is provided as a mechanism capable of switching a pressure oil path by switching the state of communication among the pressure oil ports (32a, 32b, 32c, 32d, 32e, 32f). The spool portion 28 includes a spool shaft 33, a first spool cylinder 34, a second spool cylinder 35, a slider 36, and so on.

The spool shaft 33 is provided as, for example, a round bar-shaped shaft member. The spool shaft 33 constitutes a central axis of the spool portion 28, and is provided so as to extend along the axial direction, which is the longitudinal direction of the spool portion 28. One end 33a of the spool shaft 33 is fixed to the inner circumference of one end of the first spool cylinder 34, which will be described later, by, for example, threadable engagement. The other end of the spool shaft 33 that is located opposite the end 33a and is the end on the drive portion 29 side is connected to a drive shaft 40 of the drive portion 29, which will be described later.

The first spool cylinder 34 is provided as a cylindrical member, and is provided in a state where the spool shaft 33 passes therethrough. As described above, one end 33a of the spool shaft 33 is fixed to the inner circumference of one end of the first spool cylinder 34. The other end of the first spool cylinder 34 on the drive portion 29 side is provided with a flange portion 34a that expands so that its diameter lengthens outward.

The second spool cylinder 35 is provided as a cylindrical member, and the first spool cylinder 34 passes therethrough. The first spool cylinder 34 and the second spool cylinder 35 are disposed concentrically The second spool cylinder 35 is installed outside the first spool cylinder 34 in a state where the inner circumference of second spool cylinder 35 is slidable with respect to the outer circumference of the first spool cylinder 34.

From one end of the second spool cylinder 35, one end of the first spool cylinder 34 protrudes. Note that the end of the first spool cylinder 34 projecting from the second spool cylinder 35 is disposed inside the sleeve 31. The other end of the second spool cylinder 35 on the drive portion 29 side is disposed so that it can be in contact with the flange portion 34a of the first spool cylinder 34. The other end of the second spool cylinder 35 is in contact with the flange portion 34a on the side opposite the side facing the drive portion 29.

The second spool cylinder 35 is provided with a flange portion 35a that expands so that the diameter thereof lengthens outward, at a position on the other end side that is eccentric from the tip of this end toward a side opposite the drive portion 29 side. One end of a spring 46 is in contact with the flange portion 35a from the drive portion 29 side. Thus the second spool cylinder 35 is biased by the spring 46 at the flange portion 35a toward the side opposite the drive portion 29 side.

Note that the spring 46 is provided as a coil spring. Inside the end of the spring 46 in contact with the flange portion 35a, the flange portion 34a of the first spool cylinder 34 and the other end of the second spool cylinder 35 are disposed. The other end of the spring 46 is supported with respect to a spring receiver 47 fixed to the drive portion 29.

The second spool cylinder 35 is supported so as to be slidable so that the outer circumference of the second spool cylinder 35 is slidable with respect to the inner circumference of the sleeve 31. The outer circumference of the second spool cylinder 35 is provided with a plurality of communication grooves (37a, 37b, 37c) that are formed in a notch shape and circumferentially extend to form groove shapes. The communication groove 37a is provided so as to be able to be in communication with the pressure oil ports (32b, 32c, 32d). The communication groove 37b is provided so as to be able to be in communication with the pressure oil ports (32d, 32e). The communication groove 37c is provided so as to be able to be in communication with the pressure oil ports (32e, 32f). The communication grooves (37a, 37b, 37c) are configured to be able to switch the state of communication among the pressure oil ports (32a, 32b, 32c, 32d, 32e, 32f), as will be described later, as a result of displacement of the second spool cylinder 35 along the axial direction of the spool portion 28.

The slider 36 is provided as a cylindrical member, and the first spool cylinder 34 passes therethrough. The slider 36 and the first spool cylinder 34 are disposed concentrically, and the slider 36 is disposed at one end of the first spool cylinder 34. The slider 36 is installed outside the first spool cylinder 34 in a state where the inner circumference of the slider 36 is slidable with respect to the outer circumference of the first spool cylinder 34. Furthermore, the slider 36 is supported so as to be slidable so that the outer circumference of the slider 36 slides with respect to the inner circumference of the sleeve 31.

One end of the slider 36 is positioned so as to be in contact with a stopper ring 48 attached to one end of the first spool cylinder 34. Note that the stopper ring 48 is provided as a ring-shaped member. In the through hole in the center of the stopper ring 48, a step portion 34b is inserted that is provided as a tip portion projecting step-wise from one end of the first spool cylinder 34. The step portion 34b passes through the stopper ring 48 and projects therefrom, and is provided with a screw portion on its outer circumference. The stopper ring 48 is fixed to one end of the first spool cylinder 34 by a fixing nut 49 being threadably engaged with the screw portion of the step portion 34b.

A pressure chamber 38 is constituted by an area defined by the outer circumference of the first spool cylinder 34, the inner circumference of the sleeve 31, the other end of the slider 36, and one end of the second spool cylinder 35. The pressure chamber 38 is in communication with the pressure oil port 32a. Thus the pressure oil supplied from the supply path 104a is introduced into the pressure chamber 38.

When the pressure oil is introduced into the pressure chamber 38, a state where the slider 36 is pressed against the stopper ring 48 is maintained. Furthermore, in a state where the pressure oil has been introduced into the pressure chamber 38, a state where the second spool cylinder 35 is pressed against the flange portion 34a of the first spool cylinder 34 against the biasing force of the spring 46 is also maintained.

With the above configuration, in the state where the pressure oil has been introduced into the pressure chamber 38, the first spool cylinder 34, the second spool cylinder 35, and the slider 36 are displaced with the spool shaft 33 when the spool shaft 33 is displaced in the axial direction of the spool portion 28. In other words, if the pressure oil has been normally supplied from at least one of the aircraft central hydraulic power source 104 and the backup hydraulic pump 17, the first spool cylinder 34, the second spool cylinder 35, and the slider 36 are displaced with the spool shaft 33.

The drive portion 29 is provided as a mechanism that is connected to an end of the spool portion 28 and drives the spool portion 28 by electromagnetic force so as to control the position of the spool portion 28 based on an electric signal. The above-mentioned electric signal is input from the actuator controller 16a to the control valve 15a. In other words, the actuator controller 16a outputs the electric signal as a control signal to the control valve 15a to drive the drive portion 29.

The drive portion 29 includes the drive shaft 40, a core 41, a coil portion 42, a support portion 43, a case 44, flat springs (45a, 45b), and so on. The case 44 is provided as a structure that internally houses the drive shaft 40, the core 41, the coil portion 42, the support portion 43, and the flat springs (45a, 45b). The case 44 is fixed to the housing 30 of the main body 27.

The drive shaft 40 is supported so as to be slidable along the axial direction of the spool portion 28 with respect to the support portion 43 inside the case 44. In the center of the drive shaft 40 in the axial direction, the core 41 provided as a movable core is fixed. To one end of the drive shaft 40, the other end of the spool shaft 33 of the spool portion 28 is connected. Thus the spool shaft 33 is configured to be displaced with the drive shaft 40 in the axial direction of the spool portion 28 as a result of displacement of the drive shaft 40 along the axial direction of the spool portion 28.

The support portion 43 is provided as a block-like structural member. The support portion 43 supports the drive shaft 40 so as to be slidable in the axial direction, and also holds the coil portion 42 disposed around the core 41.

The flat spring 45a is disposed at one end of the support portion 43, and the flat spring 45b is disposed at the other end of the support portion 43. The flat spring 45a is attached to one end of the drive shaft 40, and the flat spring 45b is attached to the other end of the drive shaft 40. The neutral position of the core 41, which is displaced with the drive shaft 40, is positioned at a predetermined position by those flat springs (45a, 45b). In other words, the neutral position, which is a position of the core 41 within the coil portion 42 in a state where no electromagnetic force is generated between the coil portion 42 and the core 41, is positioned at the predetermined position.

Current is carried to the coil portion 42 based on the above-mentioned electric signal from the actuator controller 16a. The state of the coil portion 42 is switched from a demagnetized state to an excited state as a result of the current being supplied as the above-mentioned electric signal from the actuator controller 16a. Electromagnetic force is generated between the coil portion 42 and the core 41 in response to the current supplied as the electric signal from the actuator controller 16a to the coil 42, and the core 41 is thereby driven. Upon the core 41 being driven, the spool portion 28 connected to the drive shaft 40 to which the core 41 is fixed is driven. Note that the position of the core 41 in the axial direction of the drive shaft 40 is controlled proportional to the amount of the above-described current supplied to the coil portion 42.

Furthermore, in the control valve 15a, a position detector 50 is installed at the end of the main body 27 opposite the end on the side on which the drive portion 29 is provided. The position detector 50 is provided as a mechanism for detecting the position of the spool portion 28 in the axial direction with respect to the main body 27. The position detector 50 includes a coil portion 51, a probe portion 52, a case 53, and so on.

The case 53 is installed in the housing 30 of the main body 27, and internally houses the coil portion 51. The coil portion 51 is provided with primary-side and secondary-side coils. The probe portion 52 is fixed to one end of the spool shaft 33 of the spool portion 28 via the fixing nut 49. Thus the probe portion 52 is configured to be displaced with the spool portion 28. The probe portion 52 is provided with a movable core that is relatively displaced within the coil portion 51 internally provided to the case 53. With this configuration, the position detector 50 detects the position of the probe portion 52 relative to the coil portion 51. The position detector 50 is configured to then detect the position of the spool portion 28 relative to the main body 27 by detecting the position of the probe portion 52 relative to the coil portion 51.

Note that the position detector 50 outputs a position detection signal, which is a signal based on induced voltage generated by the secondary-side coil as a result of displacement of the probe portion 52 in a state where the primary-side coil is excited in the coil portion 51. The output position detection signal is input to the actuator controller 16a. The actuator controller 16a is configured to control operation of the drive portion 29 based on the position detection signal from the position detector 50 to perform feedback control of the position of the spool portion 28.

Here, the operation of the control valve 15a will be described. The control valve 15a operates based on an electric signal serving as a control signal from the actuator controller 16a. Upon the electric signal being input to the drive portion 29, the core 41 is displaced with respect to the coil portion 42 by the electromagnetic force generated between the coil portion 42 and the core 41, as described above.

As a result, the drive shaft 40 is also displaced with the core 41. Then the spool portion 28 is displaced with the drive shaft 40 with respect to the main body 27. In other words, with the displacement of the drive shaft 40, the spool shaft 33 connected to the drive shaft 40, the first spool cylinder 34 fixed to the spool shaft 33, and the second spool cylinder 35 biased by the flange portion 34a of the first spool cylinder 34 are displaced. Moreover, at this time, the pressure oil has been introduced into the pressure chamber 38, and therefore, the second spool cylinder 35 pressed against the flange portion 34a by the pressure oil and the slider 36 pressed thereby against the stopper ring 48 are displaced with the first spool cylinder 34. The direction and amount of the displacement of the spool portion 28 with respect to the main body 27 are controlled based on an electric signal output from the actuator controller 16a to the drive portion 29.

Further, when the spool portion 28 in the state shown in FIG. 3 is displaced from the drive portion 29 side toward the position detector 50 side, the pressure oil ports 32d and 32e are in communication with each other via the communication groove 37b. Thus the pressure oil introduced from the supply path 104a into the pressure oil port 32d passes through the communication groove 37b and flows into the pressure oil port 32e. The pressure oil that has flowed into the pressure oil port 32e further flows into the oil chamber 13a in the actuator 11a via the supply/discharge path 20a.

In addition, when the spool portion 28 in the above-described state, that is, in the state shown in FIG. 3, is displaced from the drive portion 29 side toward the position detector 50 side, the pressure oil ports 32b and 32c are in communication with each other via the communication groove 37a. Thus the pressure oil, which has flowed out of the oil chamber 13b, passed through the supply/discharge path 21a, and introduced into the pressure oil port 32c, further passes through the communication groove 37a, the pressure oil port 32b, and the communication path 39 and flows into the pressure oil port 32f. The pressure oil that has flowed into the pressure oil port 32f further flows into the reservoir circuit 106 via the discharge path 106a.

On the other hand, when the spool portion 28 in the state shown in FIG. 3 is displaced from the position detector 50 side toward the drive portion 29 side, the pressure oil ports 32d and 32c are in communication with each other via the communication groove 37a. Thus the pressure oil introduced from the supply path 104a into the pressure oil port 32d passes through the communication groove 37a and flows into the pressure oil port 32c. The pressure oil that has flowed into the pressure oil port 32c further flows into the oil chamber 13b in the actuator 11a via the supply/discharge path 21a.

In addition, when the spool portion 28 in the above-described state, that is, in the state shown in FIG. 3, is displaced from the position detector 50 side toward the drive portion 29 side, the pressure oil ports 32e and 32f are in communication with each other via the communication groove 37c. Thus the pressure oil, which has flowed out of the oil chamber 13a, passed through the supply/discharge path 20a, and introduced into the pressure oil port 32e, further passes through the communication groove 37c and flows into the pressure oil port 32f. The pressure oil that has flowed into the pressure oil port 32f further flows into the reservoir circuit 106 via the discharge path 106a.

Note that in the control valve 15a, if, as described above, the pressure oil has been normally supplied from at least one of the aircraft central hydraulic power source 104 and the backup hydraulic pump 17, then the first spool cylinder 34, the second spool cylinder 35, and the slider 36 are displaced with the spool shaft 33. However, in a state where the pressure of the supplied pressure oil from both the aircraft central hydraulic power source 104 and the backup hydraulic pump 17 is insufficient, the second spool cylinder 35 is displaced with respect to the first spool cylinder 34 by the biasing force of the spring 46. Then the second spool cylinder 35 comes close to, or in contact with, the slider 36.

In the above-described state, both communication holes of the pressure oil port 32e opening to the inner circumference of the sleeve 31 are blocked by the second spool cylinder 35 at positions corresponding to the communication groove 37c. Then the movement of the pressure oil via the supply/discharge path 20a is blocked. Thus, in the actuator 11a, displacement of the rod 14 with respect to the cylinder 13 is restricted and locked. Consequently, the positional state of the elevator 103 is maintained.

Next, the operation of the hydraulic system 1 will be described. In a state where a loss or degradation of the function of the first aircraft central hydraulic power source 104 is not occurring, the backup hydraulic pump 17 is not run. In this state, in the actuator 11a, the pressure oil from the first aircraft central hydraulic power source 104 is supplied to one of the oil chambers (13a, 13b) via the control valve 15a, and the oil is discharged from the other oil chamber (13a, 13b) and caused to return to the reservoir circuit 106 via the control valve 15a. Furthermore, the connection state of the control valve 15a is switched based on an electric signal serving as a control signal from the actuator controller 16a, and the oil chambers (13a, 13b) to/from which the pressure oil is supplied and discharged are thereby switched. As a result of the supply and discharge of the pressure oil to/from the oil chambers (13a, 13b), the rod 14 is displaced with respect to the cylinder 13, and the actuator 11a thereby operates and the elevator 103 is driven.

On the other hand, if a loss or degradation of the function of the first aircraft central hydraulic power source 104 occurs, electric energy is supplied to the electric motor 18 via the driver 19 based on a command signal from the flight controller 25, and thereby the electric motor 18 is started to run, and the backup hydraulic pump 17 is started to run. In the actuator 11a, the pressure oil from the backup hydraulic pump 17 is supplied to one of the oil chambers (13a, 13b) via the control valve 15a and discharged from the other oil chamber (13a, 13b) and sucked by the backup hydraulic pump 17 via the control valve 15a, and the pressure of the oil is thereby raised. Furthermore, the connection state of the control valve 15a is switched based on an electric signal from the actuator controller 16a, and the oil chambers (13a, 13b) to/from which the pressure oil is supplied and discharged are thereby switched. Thus the actuator 11a operates, and the elevator 103 is driven.

As described above, with the hydraulic system 1, even if a loss or degradation of the function of the first aircraft central hydraulic power source 104 occurs, the pressure oil is supplied from the backup hydraulic pump 17 so as to be able to drive the actuator 11a. The control valve 15a is not configured as an electrohydraulic servo valve, but configured so that the drive portion 29 is connected to an end of the spool portion 28 and drives the spool portion 28 by electromagnetic force so as to control the position of the spool portion 28 based on an electric signal. In other words, with the hydraulic system 1, the control valve 15a, which controls the operation of the actuator 11a by controlling supply and discharge of the pressure oil to/from the actuator 11a, is configured as a direct-drive valve structure that directly drives the spool portion 28 by electromagnetic force based on an electric signal from the actuator controller 16a.

In a conventional hydraulic system including an actuator, a backup hydraulic pump, an electric motor, and a control valve having an electrohydraulic servo valve, increase in the work load of the backup hydraulic pump and the electric motor associated with oil leakage in the electrohydraulic servo valve has a significant influence as a cause of heat generation in such a conventional hydraulic system. On the other hand, in the hydraulic system 1 according to the present embodiment, the control valve 15a is configured as a direct-drive valve structure capable of remarkably reducing oil leakage. Therefore, according to the present embodiment, the work load of the backup hydraulic pump 17 and the electric motor 18 associated with oil leakage can be reduced, and the heat generated in the hydraulic system 1 can be greatly reduced.

Consequently, according to the present embodiment, the heat generation in the hydraulic system 1 as a whole is suppressed, and it is therefore possible to achieve reduction in the size or the number of cooling devices. As a result, reduction in the weight and the size of the hydraulic system 1 as a whole can be achieved. Furthermore, because it is possible to achieve reduction in the size or the number of the cooling devices, it is not necessary to provide any cooling device for guiding air outside the airframe to the device to be cooled and then externally discharging the air. As a result, decrease in the airframe efficiency will be prevented as well.

Accordingly, according to the present embodiment, it is possible to provide the aircraft actuator hydraulic system 1 capable of driving the actuator even at the time of a loss or degradation of the function of the aircraft central hydraulic power source, preventing decrease in the airframe efficiency while suppressing the heat generation in the system as a whole, and achieving reduction in the size and weight of a system configuration.

Furthermore, according to the present embodiment, the backup hydraulic pump 17, the electric motor 18, and the control valve 15a are installed inside the tailplane 102 on which the elevator 103 is provided, and are therefore installed in an area closer to the actuator 11a. Therefore, it is not necessary to provide any long pipeline or the like such as in the case where those components are installed on the body 101 side. As a result, further reduction in the weight and the size of the hydraulic system 1 can be achieved.

Note that in recent years, wings are desired to be thinned for the purpose of increasing the airframe efficiency to achieve improvement in fuel efficiency In addition, as the wings are further thinned, it is desirable to achieve further reduction in the size of the hydraulic system installed inside each wing without decreasing the output level of the actuator. In the case of the present embodiment, with a reduction of the size of the backup hydraulic pump 17 and an increase in the rotational speed of the backup hydraulic pump 17, it is possible to further reduce the size of the hydraulic system 1 installed in each tailplane 102 without decreasing the output level of the actuator 11a.

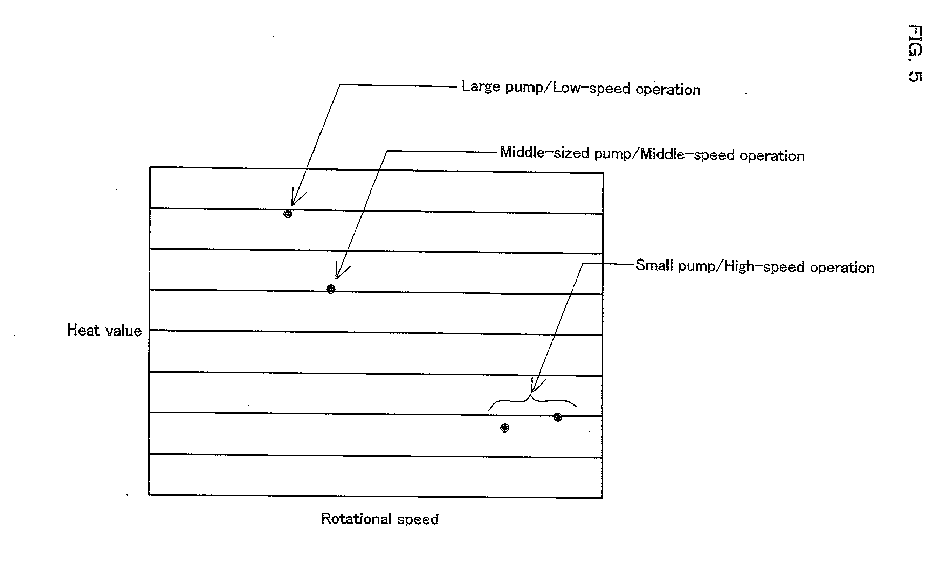

FIG. 5 is a diagram showing a general relationship among the size of a pump, the heat value of a pump and an electric motor, and the rotational speed of a pump. In the diagram shown in FIG. 5, the horizontal axis indicates the rotational speed of a pump, and the vertical axis indicates the heat value of a pump and an electric motor. As shown in FIG. 5, there is a general tendency that the total heat value of the electric motor and the pump rotationally driven thereby increases proportional to the increase in the rotational speed of the pump, whereas, in terms of the increase in the size of a pump, the total heat value increases proportional in higher dimensions (two dimensions or higher) to the increase in an area of friction accompanying the increase in the size of the pump. Therefore, the heat value can be reduced more in the mode in which a desired output level is secured by operating a smaller pump at a higher rotational speed than in the mode in which the desired output level is secured by operating a larger pump at a lower rotational speed. In other words, as a result of reduction in the size of the backup hydraulic pump 17 and the higher rotational speed of the backup hydraulic pump 17, the total heat value of the backup hydraulic pump 17 and the electric motor 18 reduces without decreasing the output level of the actuator 11a. Accordingly, in this case, the heat generation in the hydraulic system 1 can be further suppressed.

Furthermore, according to the present embodiment, the main body 27 of the control valve 15a and the casing 26 of the actuator controller 16a serving as a superordinate controller that outputs an electric signal to the control valve 15a to drive the drive portion 29 are integrally fixed. Therefore, current necessary for driving the control valve 15a can be supplied via the actuator controller 16a directly fixed to the control valve 15a. It is thus possible to remarkably simplify the wiring for supplying the current, and further simplify the configuration.

In a situation where the flight condition of the aircraft 100 drastically changes depending on the weather or air current condition, or in a situation where the aircraft 100 takes off or lands, the actuator 11a is required to operate so as to produce a high output. On the other hand, a situation where the flight condition of the aircraft 100 is stable can be handled by the actuator 11a operating so as to produce a low output. Therefore, according to the present embodiment, the rotational speed of the backup hydraulic pump 17 can be switched to multiple levels, and it is thus possible to change the rotational speed of the backup hydraulic pump 17 in accordance with the required output level of the actuator 11a. Consequently, it is possible to further improve the operation efficiency of the backup hydraulic pump 17 and the electric motor 18, and further suppress the heat generation.

Although an embodiment of the present invention has been described thus far, the present invention is not limited to the embodiment described above, and various modifications may be made within the scope recited in the claims. For example, the following modifications may be implemented.
(1) Although the above embodiment has been described, taking, as an example, the aircraft actuator hydraulic system for driving an elevator, this need not be the case. An aircraft actuator hydraulic system for driving a moving surface other than an elevator, such as an aileron, may alternatively be implemented.
(2) The mode of the hydraulic circuit for connecting the actuator and the hydraulic device to the aircraft central hydraulic power sources is not limited to the mode of the circuit described as an example in the above embodiment, but may be modified in various manners for implementation.
(3) The structure of the control valve is not limited to the mode described as an example in the above embodiment, but need only be a direct-drive valve structure. Various modifications thereof may be made for implementation. For example, a mode may be implemented in which the drive portion includes an electric motor and is connected to an end of the spool portion directly or via a gear mechanism portion or the like.
(4) Although the above embodiment has been described, taking, as an example, the mode in which the main body of the control valve and the casing of the actuator controller are integrally fixed, this need not be the case. The main body of the control valve and the casing of the actuator controller may be fixed via a common base member. Furthermore, the main body of the control valve and the casing of the actuator controller may be separately provided and installed so as to be spaced apart from each other.

The present invention can be widely applied to aircraft actuator hydraulic systems for driving moving surfaces of aircrafts using hydraulically operated actuators. The present invention is not limited to the above-described embodiment, and all modifications, applications and equivalents thereof that fall within the claims, for which modifications and applications would become apparent by reading and understanding the present specification, are intended to be embraced therein.

## Claims

1. An aircraft actuator hydraulic system (1) for driving a moving surface (103) of an aircraft (100) using a hydraulically operated actuator, comprising:
an actuator (11a) that operates as a result of a pressure oil being supplied from an aircraft central hydraulic power source (104) installed in a body (101) of the aircraft (100) and drives the moving surface (103);
a backup hydraulic pump (17) capable of supplying the pressure oil to the actuator (11a) when a loss or degradation of a function of the aircraft central hydraulic power source (104) occurs;
an electric motor (18) that drives the backup hydraulic pump (17); and
a control valve (15a) that is provided on a path that allows the backup hydraulic pump (17) and the aircraft central hydraulic power source (104) to be in communication with the actuator (11a), and controls an operation of the actuator (11a) by controlling supply of the pressure oil to the actuator (11a) and discharge of the pressure oil from the actuator (11a),
wherein the control valve (15a) has a main body (27) provided with a pressure oil port to/from which the pressure oil is supplied and discharged, a spool portion (28) provided so as to be slidable in the main body (27) and capable of switching a path of the pressure oil, and a drive portion (29) that is connected to an end of the spool portion (28) and drives the spool portion (28) by an electromagnetic force so as to control a position of the spool portion (28) based on an electric signal.

2. The aircraft actuator hydraulic system (1) according to claim 1,
wherein the backup hydraulic pump (17), the electric motor (18), and the control valve (15a) are installed inside a wing (102) on which the moving surface (103) is provided in the aircraft (100).

3. The aircraft actuator hydraulic system (1) according to claim 1 or 2,
further comprising an actuator controller (16a) that controls an operation of the actuator (11a) via the control valve (15a) by outputting the electric signal to the control valve (15a) to drive the drive portion (29),
wherein the main body (27) of the control valve (15a) and a casing (26) of the actuator controller (16a) are integrally fixed, or fixed via a common base member.

4. The aircraft actuator hydraulic system (1) according to any one of claims 1 to 3,
wherein a rotational speed of the backup hydraulic pump (17), at which the backup hydraulic pump (17) is rotationally driven by the electric motor (18), can be switched to multiple levels.
